(19) 

**Europäisches Patentamt**
**European Patent Office**
**Office européen des brevets**

(11) **EP 1 436 047 B1**

(12) **EUROPEAN PATENT SPECIFICATION**

(45) Date of publication and mention
of the grant of the patent:
**11.08.2010 Bulletin 2010/32**

(51) Int Cl.:
*A62B 9/02* *(2006.01)*    *B63C 11/22* *(2006.01)*

(21) Application number: **02775664.2**

(86) International application number:
**PCT/SE2002/001858**

(22) Date of filing: **11.10.2002**

(87) International publication number:
**WO 2003/033076 (24.04.2003 Gazette 2003/17)**

(54) **BALANCED VALVE DEVICE AND BREATHING APPARATUS COMPRISING SUCH VALVE DEVICE**

ENTLASTUNGSVENTILVORRICHTUNG UND ATEMGERÄT MIT EINER SOLCHEN VENTILVORRICHTUNG

SYSTEME DE SOUPAPE EQUILIBREE ET APPAREIL RESPIRATOIRE COMPRENANT UN TEL SYSTEME

(84) Designated Contracting States:
**AT BE BG CH CY CZ DE DK EE ES FI FR GB GR IE IT LI LU MC NL PT SE SK TR**

(30) Priority: **18.10.2001 SE 0103478**

(43) Date of publication of application:
**14.07.2004 Bulletin 2004/29**

(73) Proprietor: **POSEIDON INDUSTRI AB**
**421 08 Västra Frölunda (SE)**

(72) Inventor: **KELLSTRÖM, Anders**
**S-443 92 Lerum (SE)**

(74) Representative: **Estreen, Lars J.F. et al**
**Kransell & Wennborg KB**
**P.O. Box 27834**
**115 93 Stockholm (SE)**

(56) References cited:
**EP-A1- 0 807 571    US-A- 4 971 108**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## FIELD OF INVENTION

The present invention relates to valve devices and then particularly to balanced valve devices for controlling the flow of pressurised breathable gas to breathing regulators. The invention also relates to such a breathing regulator.

## DESCRIPTION OF THE BACKGROUND ART

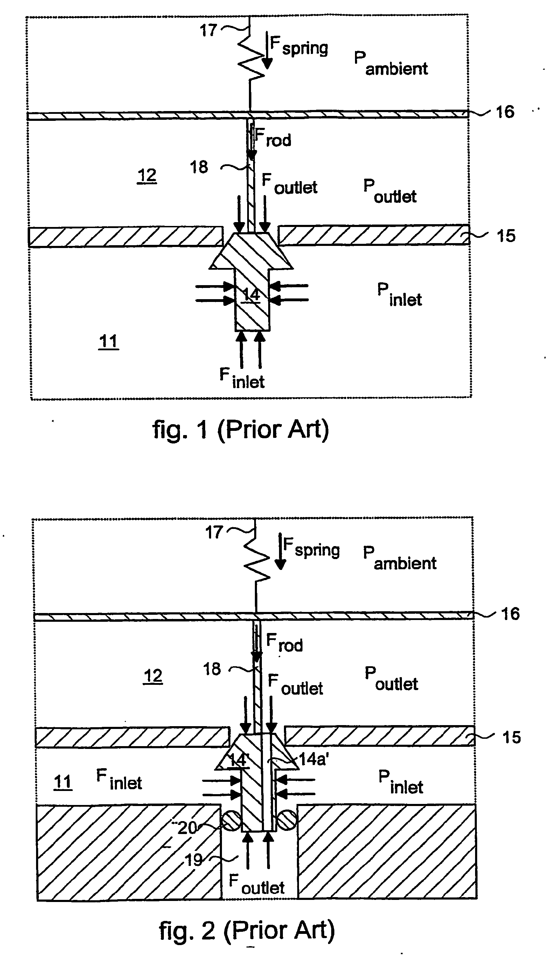

Diving equipment includes a so-called breathing regulator which is connected to one or more diving tanks or their technical equivalence and which is intended to adjust the tank pressure to a predetermined regulated pressure. The breathing regulator is provided with a valve device to this end. Fig. 1 illustrates diagrammatically one such valve device constructed in accordance with known technology. As will be seen, the valve includes an inlet side 11, which is under tank pressure $P_{inlet}$, and an outlet side 12, which is under the regulated pressure $P_{outlet}$. A conical valve body 14 is movable in a seating 15. The outlet side 12 is delimited by a flexible diaphragm or membrane 16, which is connected to a spring 17 that exerts a spring force $F_{spring}$ on the diaphragm 16. Thus, one side of the diaphragm 16 is subjected to forces from the regulated pressure $P_{outlet}$, while the other side of the diaphragm is subjected to forces from the ambient pressure $P_{ambient}$. The spring force, together, e.g., with forces exerted by the diaphragm 16, acts/act on a rod 18 connected to the valve body and thus exerting a force $F_{rod}$ onto said body.

This known valve has the following *modus operandi.* Movement of the valve body 14 is determined by the forces to which it is subjected. These forces include (as shown in the figure) an upwardly directed force $F_{inlet}$ determined by the tank pressure. This force is counteracted essentially by downwardly acting forces $F_{outlet}$, which are comprised generally of the effect of the regulated pressure $P_{outlet}$ on the valve body and of the rod force $F_{rod}$ When a diver who has a nozzle connected to the outlet side inhales, therewith causing a decrease in the regulated pressure, the pressure on the diaphragm 16 decreases and the diaphragm then exerts an increasing force on the rod 18. The force $F_{rod}$ then increases and, in the case of a functioning valve, the valve body will be moved downwards, thereby allowing tank gas to flow in through the seating 15 until the regulated pressure has increased to an extent at which the valve body returns to the position shown in Fig. 1.

One problem with such known valve devices is that movement of the valve body is dependent on the tank pressure, which in the case of a full tank can correspond to a super atmospheric pressure of about 300 bar and may fall to close on 0 bar during use. This means, in turn, that the valve characteristic will vary, together with the regulated pressure.

Several solutions to this problem have been proposed. One example of these proposed solutions is illustrated in Fig. 2. The valve shown in Fig. 2 corresponds to the valve shown in Fig. 1 in many aspects, although in this latter case the homogenous valve body 14 has been replaced with a valve body 14' that includes a through-passing passageway 14a'. This passageway connects the outlet 12 with a space 19, which is sealed against the inlet 11 by means of an O-ring 20. Consequently, those forces $F_{inlet}$ acting on the valve body from the inlet side have essentially no axial component, thereby providing a balanced valve that gives a regulated pressure generally independent of $P_{intlet}$. Another O-ring solution is disclosed in EP 0 807 571.

The use of a valve body of this design, however, has the drawback that the sealing surface between the valve body and the seating ultimately tends to leak. There are several reasons for this. The fit between the hole and the cone of the valve body must be perfect - no irregulatories can be permitted. After having been in use for a longer period of time, the cone becomes damaged, in the form of scratches and ruts in the hole-defining edge and the cone, this damage contributing to seal leakage. Furthermore, the valve body must be straight, meaning that the body must be guided with utmost precision. The O-ring may begin to leak as a result of abrasion and other type of wear, thereby preventing achievement of the desired balancing effect and sealing effect.

These drawbacks associated with the use of a conical valve body are avoided when using a spherical sealing body. A spherical body is self-guiding, thereby obviating the need of the accurate guide required by a conical valve body.

A guided conical valve body and a semi-spherical sealing body is disclosed in US 4,971,108.

It will be realised, however, that the balancing solution illustrated in Fig. 2 cannot be applied when a spherical body is used as a valve-closing means.

## SUMMARY OF THE INVENTION

One object of the present invention is to provide a generally balanced valve device, in other words a valve device with which the pressure on the outlet side is held essentially constant regardless of the pressure on the inlet side.

The invention is based on the realization that balancing of the valve device can be achieved by causing the seating on which the valve-closing member rests to move under the influence of the pressure on both the inlet side and the outlet side of said valve.

According to the invention, there is thus provided a valve device as defined in Claim 1.

Also provided in accordance with the invention is a breathing regulator that includes such a valve device.

The inventive valve device and the inventive breathing regulator provide an essentially constant valve characteristic, while also affords a simple mechanical solution.

In one particularly preferred embodiment, a spherical body, or ball, is used as a valve-closing member. The valve-closing member is thus beneficially self-guiding.

Other preferred embodiments are defined in the dependent Claims.

**BRIEF DESCRIPTION OF THE DRAWINGS**

The invention will now be described in more detail by way of example and also with reference to the accompanying drawings, in which

Fig. 1 is a diagrammatic illustration of an unbalanced valve device according to prior art;

Fig. 2 is a diagrammatic illustration of a balanced valve device according to prior art;

Fig. 3 is a diagrammatic illustration of a valve device according to the invention;

Fig. 4 illustrates a breathing regulator that includes an inventive valve device, said valve being closed when high pressure prevails on the inlet side;

Fig. 5 shows the breathing regulator of Fig. 4 with the valve open;

Fig. 6 shows the breathing regulator of Fig. 4 with the valve closed when low pressure prevails on the inlet side; and

Fig. 7 shows the breathing regulator of Fig. 6 with the valve open.

**DESCRIPTION OF THE PREFERRED EMBODIMENT**

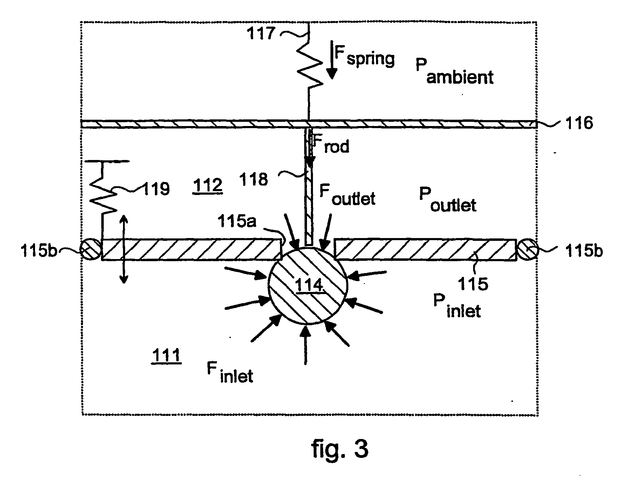

A preferred embodiment of an inventive valve device and an inventive breathing regulator will now be described, first with reference to Fig. 3. It will be noted that the directions mentioned in the description, such as up, down, etc., refer only to those directions shown in the figures and shall not therefore be considered to limit the scope of the invention when interpreting the accompanying Claims.

Fig. 3 is a principle diagram of an inventive valve device. The valve device includes an inlet side 111, an outlet side 112, a diaphragm or membrane 116, a diaphragm spring 117, and a rod 118. These valve components correspond to the valve components shown in Fig. 1. The valve device also includes a valve-closing body in the form of a ball 114, which rests over an opening 115a in a seating 115. Distinct from the seating used in said known valve technology, the seating 114 can move up and down, as indicated by the doubleheaded arrow in Fig. 3. Sealing between the inlet and the outlet sides is achieved by means of an O-ring 115b, which abuts the movable seating, and a regulator housing (not shown in Fig. 3). The seating spring 119 is connected to the seating. Thus, the seating is able to move in response to a difference in the pressure between the inlet side 111 and the outlet side 112, and also in accordance with the spring characteristic of the spring 119. In order to obtain said essentially balanced valve function, it is necessary that the following ratios are fulfilled between relevant areas and spring characteristics:

$$k(119)=k(117) \cdot \frac{A(115a)-A(115b)}{A(115b)}$$

where
k(119) = the stiffness of the seating spring 119;
k(117) = the stiffness of the diaphragm spring 117;
A(115a) = the area of the opening 115a in the seating 115; and
A(115b) = the area sealed by the O-ring 115b.

It should be noted that this is a somewhat simplified relationship that does not take, e.g., O ring friction and sealing force into account.

Because the seating is movable, the force of the spring will vary in accordance with the position of the seating, when the ball rests in the seating. This enables changes in gas pressure on the inlet side to be compensated for in respect of "automatically" changed spring forces. For instance, if the tank pressure should decrease, resulting in a smaller upwardly acting force $F_{inlet}$, the seating 115 will move downwards in the figure. The spring is extended as a result of this downward movement of the seating, resulting in a decrease in the downwardly acting force $F_{rod}$. The person skilled in this particular technical field will be able to readily dimension the regulator components so that the changes in upwardly directed and downwardly directed forces on the ball will cancel each other out, thereby achieving balancing of the valve device; see the above formula.

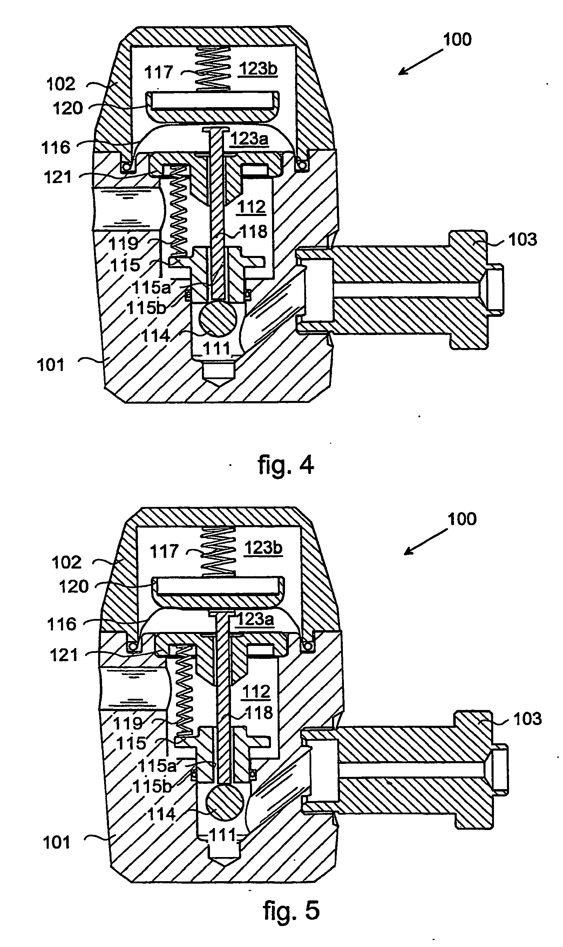

An embodiment of a breathing regulator 100 that includes an inventive valve device will now be described with reference to Figs. 4-7. The regulator comprises a housing 101 whose interior is sealed against the surroundings by means of the diaphragm 116. The housing includes a lid or cover 102, which functions as a counter-pressure means for the spring 117. A tank coupling 103 is also sealingly connected to the housing.

The breathing regulator includes an inlet side 111 which is adapted for connection to one or more diving tanks (not shown) and an outlet side 112 adapted for connection to a breathing nozzle (not shown). The inlet and outlet sides are mutually separated by a valve seating 115. The valve seating is able to move up and down and is sealed against the housing 101 by means of an O-ring 115b. The seating has an axially through-passing opening 115a of circular cross-section, said opening forming a connecting passageway between the inlet and outlet sides. Movement of the seating is regulated by a spring 119.

A ball 114 functions as a valve-closing body. The ball rests in the seating 115 and closes the passageway 115a in the position shown in Fig. 4. The ball acts on a rod 118 which, in turn, acts on the diaphragm 116 and thereby on a pressure plate 120 which is spring-biased downwards by means of the spring 117. The rod is mounted in a holder 121 by means of a slide bearing (not shown). The function of the holder 121 is thus to guide the rod 118, among other things, and also to hold the seating spring 119. The holder is also designed to limit upward movement of the seating to an upper end position. The space in which the pressure plate 120 is disposed is divided by the flexible diaphragm 116 into a lower chamber 123a, which is in connection with the outlet side 112, and an upper chamber 123b.

The valve seating is comprised essentially of metal, although it has a plastic coating on the surface that abuts the ball. The ball is made of steel or a ceramic material. In the case of the preferred embodiment, the diaphragm 116 is a roll diaphragm.

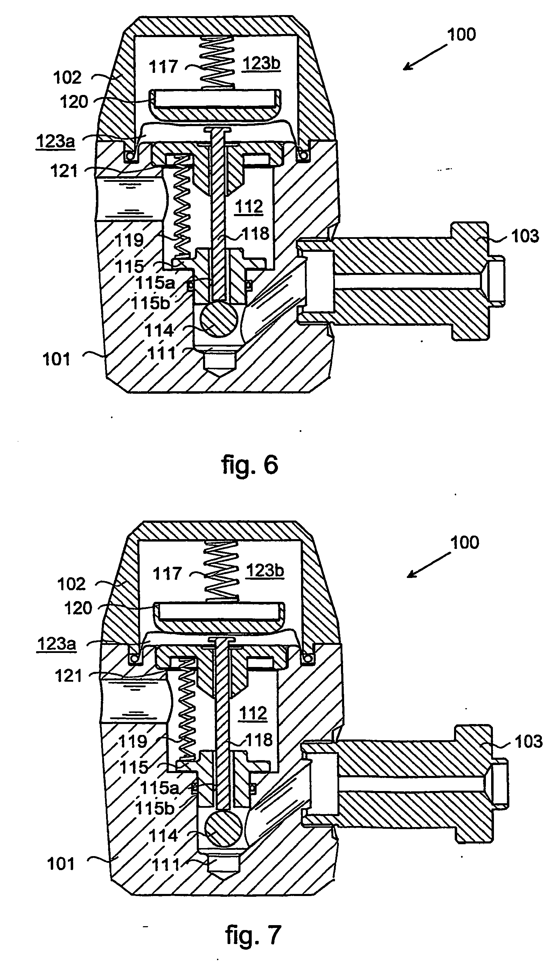

Fig. 4 shows the breathing regulator 100 in a closed state, with high pressure on the inlet side, wherewith it will be seen that the seating 115 has been displaced slightly upwards away from the bottom of the chamber 112. This corresponds to the situation when a dive commences. Fig. 5 shows the breathing regulator in the same situation, but with inhalation when the valve device is open. Inhalation empties the inlet side of air, and therewith also the lower chamber 123a, causing the pressure in the chamber to fall. This causes the flexible diaphragm 116 to move downwards and thereby exert force on the rod 118, which, in turn, acts downwardly on the ball 114. Because the downwardly acting forces on the ball in this position exceed the upwardly directed forces, the ball will leave its sealing placement in the seating and allow air to pass through the passageway 115a. This state continues until the upwardly directed forces acting on the ball exceed the downwardly acting forces, in other words when the pressure on the inlet side, and therewith in the lower chamber 123a, has increased to a desired regulated pressure. The diaphragm is therewith caused to return to the position shown in Fig. 4. The super-atmospheric pressure in the diving tank falls after being used for awhile and therewith also the pressure on the inlet side 111. The regulated pressure on the outlet side 112, however, shall remain at the desired regulated pressure. This means that the seating 115 gradually moves down and finally takes the lower end position shown in Figs. 6 and 7. This means, in turn, that the forces exerted by the rod 118 on the ball become smaller, which balances the decreasing forces resulting from the drop in pressure in the diving tank. In other respects, opening and closing of the valve in the position shown in Figs. 6 and 7 take place precisely as in the situation described above with reference to Figs. 4 and 5.

The inventive breathing regulator achieves the same valve balancing effect as that earlier achieved with the use of an O-ring sealed conical valve body as a valve-closing means, see Fig. 2. At the same time, there are obtained those advantages that are afforded by the use of a ball as a valve-closing body, such as a self-guiding effect.

Although the invention has been described with reference to a preferred embodiment of a valve device and a preferred embodiment of a breathing regulator, the person skilled in this particular technical field will be aware that these embodiments can be varied or modified within the scope of the accompanying Claims. For example, the valve seating may consist entirely of metal, and the ball may be made of plastic. To avoid wear, the edge surface of the passageway 115a that functions as an abutment surface on the seating 115 against the ball 114 may be coated with a plastic material.

In use, the ball 114 rests against the rod 118. In order to counteract the force of gravity on the ball, and therewith ensure that the ball will not fall to the bottom at a given attitude on the regulator - which could cause the ball to be wrongly positioned in the seating as a result, e.g., of a very slow or very fast increase of $P_{inlet}$ - a spring (not shown) may be included between the ball and the bottom of the regulator housing. In such case, the spring shall be sufficiently weak to render its force addition negligible, or, alternatively, this force addition can be included when dimensioning the regulator.

The seating has been shown to be movable under the effect of the pressure on the inlet and outlet sides. For obtaining desired movement characteristics, there has been described a seating spring 119. Alternatively, several springs, for instance helical springs or cup springs, may be arranged between the seating and the holder 121. Alternatively, the intrinsic springiness of the seating, i.e. its ability to bend under pressure, may be utilised to obtain the desired movement of the seating. In this case, the function of the seating spring 119 is replaced by a fixedly mounted seating in which outward bending or compression of the seating material replaces the function of the seating spring 119.

There has been shown a spring 117 that acts on the pressure plate 120. Alternatively, the forces exerted by the diaphragm 116 may replace the forces exerted by the spring, therewith enabling the spring to be omitted.

Although a ball has been described as a valve-closing body, it will be understood that a movable seating can also be used together with a conical body as a valve-closing means.

The servo device may include a plunger instead of a flexible diaphragm.

Although the valve device described is primarily intended for divers, it will be understood that similar applications are also encompassed by the inventive concept as defined by the appended claims, such as in connection with equipment for smoke divers, medical care equipment, etc.

**Claims**

1. A valve device particularly for a breathing regulator (100) for divers, comprising

   - an inlet chamber (111) connectable to a source of gas under super-atmospheric pressure ($P_{inlet}$);
   - an outlet chamber (112) that is under a regulated pressure ($P_{outlet}$);
   - a seating (115) sealingly arranged between said inlet chamber and said outlet chamber, said seating including a through-passing passageway (115a) that interconnects said inlet chamber and said outlet chamber; and
   - a valve element 114 which is movably arranged in said seating and which is adapted to open and close said passageway, said valve element being subjected to forces that include forces from said super-atmospheric and regulated pressures; and
   - a servo element (116, 117, 118) adapted to regulate said valve element,

   **characterised** element being subjected to forces that include forces from said super-atmospheric and regulated pressures; and

   - in that said seating is movable under the influence of said super-atmospheric pressure and said regulated pressure; and
   - in that said servo element exerts on said valve element a force that depends on the position of said movable seating, so that varying force-influenced actuation of said valve element by said super-atmospheric pressure is compensated for by a corresponding varying force from said servo element.

2. A valve device according to Claim 1, in which said valve element (114) is a ball.

3. A valve device according to Claim 1, said valve element (114) is a conical valve body.

4. A valve device according to any one of Claims 1-3, in which said servo element includes

   - a flexible diaphragm (116) that can be influenced by said regulated pressure ($P_{outlet}$); and
   - a rod (118) connected to said diaphragm;
   - wherein said rod exerts on said valve element in the seating a force that depends on the difference between an ambient pressure ($P_{ambient}$); and said regulator pressure ($P_{outlet}$).

5. A valve device according to any one of Claims 1-4, wherein the seating (115) is comprised of metal.

6. A valve device according to Claim 5, in which an edge surface of said passageway (115a) functioning as an abutment surface on said seating (115) against said valve-closing body (114) is coated with a plastic material.

7. A valve device according to any one of Claims 1-6, in which the function of the spring (119) is replaced by a fixedly mounted seating, wherein outward bending or compression of the seating material replaces the function of the spring (119).

8. A valve device according to any one of Claims 1-7, comprising a spring (119) in connection with said seating.

9. A valve device according to any one of Claims 1-8, in which the valve closing body (114) is comprised of any of plastic and metal.

10. A breathing regulator (100) having a housing (101, 102) and including a valve device according to any one of the preceding Claims.

**Patentansprüche**

1. Ventilvorrichtung, insbesondere für einen Atemregulator (100) für Taucher, umfassend

   - eine Einlasskammer (111), die an eine Gasquelle unter superatmosphärischem Druck ($P_{inlet}$) anschließbar ist;
   - eine Auslasskammer (112), die unter einem geregelten Druck ($P_{outlet}$) steht;
   - einen Sitz (115), der dichtend zwischen der Einlasskammer und der Auslasskammer angeordnet ist, wobei der Sitz einen durchführenden Durchgang (115a) umfasst, der die Einlasskammer und die Auslasskammer miteinander verbindet; und
   - ein Ventilelement (114), das beweglich in dem Sitz angeordnet ist, und das angepasst ist, den Durchgang zu öffnen und zu schließen, wobei das Ventilelement Kräften ausgesetzt ist, die Kräfte von dem superatmosphärischen und dem geregelten Druck umfassen; und
   - ein Servoelement (116, 117, 118) das angepasst ist, dass Ventilelement zu regeln,

   **dadurch gekennzeichnet, dass**

   - der Sitz unter dem Einfluss des superatmosphärischen Drucks und des geregelten Drucks beweglich ist; und

- das Servoelement auf das Ventilelement eine Kraft ausübt, die von der Position des beweglichen Sitzes abhängt, so dass eine variierende kraftbeeinflusste Betätigung des Ventilelements durch den superatmosphärischen Druck durch eine entsprechende variierende Kraft von dem Servoelement ausgeglichen wird.

2. Ventilvorrichtung nach Anspruch 1, in der das Ventilelement (114) eine Kugel ist.

3. Ventilvorrichtung nach Anspruch 1, wobei das Ventilelement (114) ein konischer Ventilkörper ist.

4. Ventilvorrichtung nach einem der Ansprüche 1 - 3, in der das Servoelement umfasst

   - eine flexible Membran (116), die von dem geregelten Druck ($P_{outlet}$) beeinflusst werden kann; und
   - eine Stange (118), die an die Membran angeschlossen ist;
   - wobei die Stange auf das Ventilelement in dem Sitz eine Kraft ausübt, die von der Differenz zwischen einem Umgebungsdruck ($P_{ambient}$); und dem Regulatordruck ($P_{outlet}$) abhängt;

5. Ventilvorrichtung nach einem der Ansprüche 1-4, wobei der Sitz (115) aus Metall besteht.

6. Ventilvorrichtung nach Anspruch 5, in der eine Kantenfläche des Durchgangs (115a), der als Anlagefläche des Sitzes (115) gegen den Ventilschließkörper (114) dient, mit einem Kunststoffmaterial beschichtet ist.

7. Ventilvorrichtung nach einem der Ansprüche 1 - 6, in der die Funktion der Feder (119) durch einen fest montierten Sitz ersetzt ist, wobei ein Nach-Außen-Biegen oder Zusammendrücken des Sitzmaterials die Funktion der Feder (119) ersetzt.

8. Ventilvorrichtung nach einem der Ansprüche 1-7, umfassend eine Feder (119) in Verbindung mit dem Sitz.

9. Ventilvorrichtung nach einem der Ansprüche 1 - 8, in der der Ventilschließkörper (114) aus einem beliebigen Kunststoff und Metall besteht.

10. Atemregulator (100), der ein Gehäuse (101, 102) aufweist und eine Ventilvorrichtung nach einem der vorhergehenden Ansprüche umfasst.

**Revendications**

1. Système de soupape en particulier pour un régulateur respiratoire (100) pour plongeurs, comprenant

   - une chambre d'entrée (111) pouvant être connectée à une source de gaz sous pression super atmosphérique ($P_{intlet}$) ;
   - une chambre de sortie (112) qui est sous une pression régulée ($P_{outlet}$) ;
   - un siège (115) agencé de manière étanchéifiante entre ladite chambre d'entrée et ladite chambre de sortie, ledit siège comprenant un passage traversant (115a) qui interconnecte ladite chambre d'entrée et ladite chambre de sortie, et
   - un élément de soupape (114) qui est agencé de manière mobile dans ledit siège et qui est adapté pour ouvrir et fermer ledit passage, ledit élément de soupape étant soumis à des forces qui comprennent des forces provenant desdites pressions super atmosphérique et régulée ; et
   - un servoélément (116, 117, 118) adapté pour réguler ledit élément de soupape,

   **caractérisé**

   - **en ce que** ledit siège est mobile sous l'influence de ladite pression super atmosphérique et de ladite pression régulée ; et
   - **en ce que** ledit servoélément exerce sur ledit élément de soupape une force qui dépend de la position dudit siège mobile, de sorte qu'un actionnement variable influencé par la force dudit élément de soupape par ladite pression super atmosphérique est compensé par une force variable correspondante dudit servoélément.

2. Système de soupape selon la revendication 1, dans lequel ledit élément de soupape (114) est une bille.

3. Système de soupape selon la revendication 1, ledit élément de soupape (114) étant un corps de soupape conique.

4. Système de soupape selon l'une quelconque des revendications 1-3, dans lequel ledit servoélément comprend

   - une membrane flexible (116) qui peut être influencée par ladite pression régulée ($P_{outlet}$) ; et
   - une tige (118) connectée à ladite membrane ;
   - dans lequel ladite tige exerce sur ledit élément de soupape dans le siège une force qui dépend de la différence entre une pression ambiante ($P_{ambient}$) ; et ladite pression de régulateur ($P_{outlet}$).

5. Système de soupape selon l'une quelconque des revendications 1-4, dans lequel le siège (115) est constitué de métal.

6.  Système de soupape selon la revendication 5, dans lequel une surface de bord dudit passage (115a) fonctionnant en tant que surface de butée sur ledit siège (115) contre ledit corps de fermeture de soupape (114) est revêtue d'une matière plastique.

7.  Système de soupape selon l'une quelconque des revendications 1-6, dans lequel la fonction du ressort (119) est remplacée par un siège monté fixement, une flexion ou compression vers l'extérieur du matériau de siège remplaçant la fonction du ressort (119).

8.  Système de soupape selon l'une quelconque des revendications 1-7, comprenant un ressort (119) en connexion avec ledit siège.

9.  Système de soupape selon l'une quelconque des revendications 1-8, dans lequel le corps de fermeture de soupape (114) est constitué soit de plastique soit de métal.

10. Régulateur respiratoire (100) présentant un carter (101, 102) et comprenant un système de soupape selon l'une quelconque des revendications précédentes.

fig. 1 (Prior Art)

fig. 2 (Prior Art)

$F_{spring}$

$P_{ambient}$

117

$F_{rod}$

116

119    112    118

$F_{outlet}$    $P_{outlet}$

115a

115b    114    115b

115

$P_{inlet}$

111    $F_{inlet}$

fig. 3

**fig. 4**

**fig. 5**

fig. 6

fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0807571 A

- US 4971108 A